# EUROPÄISCHE PATENTSCHRIFT

(11) **EP 4 028 878 B1**
(45) Veröffentlichungstag und Bekanntmachung des Hinweises auf die Patenterteilung: **19.07.2023**
(21) Anmeldenummer: 20804460.2
(22) Anmeldetag: 30.10.2020
(51) Int. Cl.: G06F 9/4401, G06F 21/57

(54) **VERFAHREN ZUM SICHEREN STARTEN EINER GERÄTESOFTWARE, INSBESONDERE EINES BETRIEBSSYSTEMS, EINES ELEKTRONISCHEN GERÄTES**
METHOD FOR SECURELY STARTING A DEVICE SOFTWARE, IN PARTICULAR AN OPERATING SYSTEM, OF AN ELECTRONIC DEVICE
PROCÉDÉ POUR DÉMARRER EN TOUTE SÉCURITÉ UN LOGICIEL DE DISPOSITIF, EN PARTICULIER UN SYSTÈME D'EXPLOITATION,
D'UN APPAREIL ÉLECTRONIQUE

(30) Priorität: 14.11.2019 EP 19209148
(43) Veröffentlichungstag der Anmeldung: 20.07.2022
(73) Patentinhaber: Siemens Aktiengesellschaft, 80333 München (DE)
(72) Erfinder: DE SANTIS, Fabrizio, 80634 München (DE); FEIST, Christian Peter, 80689 München (DE)
(74) Vertreter: Siemens Patent Attorneys
(86) Internationale Anmeldenummer: PCT/EP2020/080516
(87) Internationale Veröffentlichungsnummer: WO 2021/094105

(56) Entgegenhaltungen:
- US-A1- 2013 124 840

## Beschreibung

Die Erfindung betrifft ein Verfahren zum sicheren Starten einer Gerätesoftware, insbesondere eines Betriebssystems, eines elektronischen Gerätes, bei dem eine Mehrzahl von aufeinanderfolgenden Softwaremodulen, die Softwarecode enthalten, ausgeführt werden, sowie eine Startvorrichtung und ein elektronisches Gerät, die derart ausgebildet sind, das Verfahren auszuführen.

Für das Starten eines Gerätes, auch als Hochfahren oder Booten des Gerätes bezeichnet, und insbesondere das Installieren eines Betriebssystems, war in der Vergangenheit ein Basis Input-/Output System, kurz als BIOS bezeichnet, zuständig. Moderne elektronische Geräte verwenden inzwischen anstelle des BIOS häufig ein einheitliches erweiterbares Firmwareinterface, kurz als UEFI bezeichnet. Eine solche UEFI-Firmware hat den Vorteil, dass sie aus Komponenten modular aufgebaut und einfach erweiterbar ist. Beispielkomponenten sind eine Komponente für die Fernwartung des elektronischen Gerätes, eine Komponente für digitales Rechtemanagement, eine Komponente, die eine Emulation der alten BIOS-Funktionalität umfasst, und dergleichen. Insbesondere bietet die UEFI-Firmware eine Komponente zum sicheren Start und Betrieb eines Gerätes an, die als Secure-Boot bezeichnet wird.

US 2013/124840 A1 beschreibt ein Verfahren zum sicheren Booten eines Computers, bei dem ein erster Prozessor eine initiale Stufe von Befehlen ausführt, und diese initiale Stufe von Befehlen die nachfolgenden Stufen von Firmware durch Ausführen von kryptographischen Befehlen validiert.

Eine solche Secure-Boot-Technologie prüft, ob die einzelnen Bestandteile der Startkomponente mit einem kryptografischen Schlüssel signiert sind, der in der Firmware enthalten ist.

Durch das Überprüfen der Signatur der einzelnen Startkomponenten, die als Softwarecode ausgebildet sind, wird ein ordnungsgemäßer Start des Gerätes kryptografisch sichergestellt. Dadurch kann sichergestellt werden, dass die einzelnen Softwaremodule und damit der jeweils enthaltene Softwarecode unverändert vorliegen. Es kann dadurch jedoch nicht sichergestellt werden, dass das installierte Betriebssystem keine Schadprogramme enthält oder keine Sicherheitslücken aufweist, durch die das elektronische Gerät angreifbar oder im Betrieb unsicher wird.

Es ist somit die Aufgabe der vorliegenden Erfindung, Sicherheitslücken oder Schadprogramme frühzeitig zu erkennen und somit eine spätere Manipulation des elektronischen Geräts basierend auf Sicherheitslücken im Betriebssystem, zu vermeiden.

Die Aufgabe wird durch die in den unabhängigen Ansprüchen genannten Merkmale gelöst. In den Unteransprüchen sind vorteilhafte Weiterbildungen der Erfindung dargestellt.

Gemäß einem ersten Aspekt betrifft die Erfindung ein Verfahren zum sicheren Starten einer Gerätesoftware, insbesondere eines Betriebssystems, eines elektronischen Gerätes, bei dem eine Mehrzahl von aufeinanderfolgenden Softwaremodulen, die Softwarecode enthalten, vom Gerät ausgeführt werden, umfassend die Schritte:
a) Ausführen des ersten Softwaremoduls, das einen vertrauenswürdigen Softwarecode umfasst und eine Vertrauenswurzel bildet,
b) Laden des nachfolgenden Softwaremoduls durch das vorangehende Softwaremodul,
c) Überprüfen des Softwarecodes des nachfolgenden Softwaremoduls und dem Identifizieren von Sicherheitsmerkmalen anhand eines Identifizierungsschemas,
d) Bewerten der identifizierten Sicherheitsmerkmale anhand einer Sicherheitsrichtlinie,
e) Ausführen des nachfolgenden Softwaremoduls, wenn das Bewerten einen Vertrauenswürdigkeitswert ergibt, der über einem vorgegebenen Schwellwert liegt, und
f) Durchführen der Schritte b) bis e) für alle jeweils nachfolgenden Softwaremodule, wobei Sicherheitsmerkmale durch den Softwarecode ausgeführte Funktionen sind, die innerhalb des Softwaremoduls unerwünscht sind.

Dies hat den Vorteil, dass der Inhalt, also der Softwarecode, der dem ersten Softwaremodul nachfolgenden Softwaremodule nicht nur nach kryptografischer Integrität überprüft wird, sondern auch auf Vorhandensein bzw. nicht Vorhandensein von vorgegebenen Sicherheitsmerkmalen vor deren Ausführung überprüft wird. Das Überprüfen und Identifizieren wird insbesondere anhand eines Identifizierungsschemas durchgeführt und die identifizierten Sicherheitsmerkmale werden anhand der Sicherheitsrichtlinie bewertet. Somit kann ermittelt werden, ob das nächste Softwaremodul vertrauenswürdig ist. Jedes Softwaremodul enthält somit eine Funktionalität, die das Überprüfen und die Bewertung durchführt. Das Identifizierungsschema und die Sicherheitsrichtlinie kann jeweils im Softwaremodul selbst enthalten sein oder durch das Softwaremodul geladen werden. Erst nach einer solchen Überprüfung und einer Bewertung als vertrauenswürdig, wird das nachfolgende Softwaremodul ausgeführt. So lässt sich durch ein jedes Softwaremodul beurteilen, ob das zu startende nächste also nachfolgende Softwaremodul ein vertrauenswürdiges Verhalten besitzt und gestartet werden kann. Die Überprüfung der Funktionalität des nachfolgenden Softwaremoduls wird somit schon während des Bootvorganges überprüft und nicht erst zu einem späteren Zeitpunkt, insbesondere wenn das Softwaremodul bereits ausgeführt ist.

Die Gerätesoftware kann jede auf dem Gerät ausgeführte Softwareeinheit sein, die durch das sequenzielle Ausführen von mehr als einem Softwaremodul gestartet wird. Das Starten der Gerätesoftware kann beim Booten des Gerätes zum Starten des Betriebssystems oder bei Laufzeit des Geräts, beispielsweise beim Starten eines Nutzerprogrammes durchgeführte werden. Das Betriebssystem eines Gerätes ist eine beispielhafte Ausführungsform einer Gerätesoftware, die ein erstes Softwaremodul, das Softwarecode in einem Boot-Nur-lese-Speicher (ROM) umfasst und im Weiteren kurz als Boot-ROM bezeichnet ist, und als weitere aufeinander folgende Softwaremodule einen Bootloader, Betriebssystem Kernel und User-Space-Programme umfasst.

Ein Softwaremodul enthält einen Softwarecode. Der Softwarecode wiederum ist so strukturiert, dass zur Laufzeit bestimmte vorgegebene Funktionen ausführt werden bzw. ausführbar sind. Sicherheitsmerkmale sind beispielsweise durch den Softwarecode ausgeführte Funktionen mit bestimmtem Inhalt. Beispielsweise kann ein Sicherheitsmerkmal eine Debug-Schnittstelle sein, die innerhalb des Softwaremoduls unerwünscht ist, da dadurch ein Zugang zu diesem Softwaremodul ermöglicht wird. Weitere Sicherheitsmerkmale können beispielsweise Schadprogramme oder andere Schnittstellen sein, die im Softwarecode des Softwaremoduls enthalten sind bzw. beim Ausführen des Softwaremoduls auf dem elektronischen Gerät implementiert werden.

In einer vorteilhaften Ausführungsform ist das Identifizierungsschema eine maschinelle Lernfunktion, insbesondere ein neuronales Netz. Die maschinelle Lernfunktion empfängt als Eingabe das nachfolgende Softwaremodul und stellt als Ausgabe eine Information zum Vorhandensein oder auch zum Nichtvorhandensein von mindestens einem Sicherheitsmerkmal bereit.

Dies hat den Vorteil, dass eine maschinelle Lernfunktion auf das Erkennen einer Vielzahl von verschiedenen Sicherheitsmerkmalen trainiert werden kann. Des Weiteren erkennt eine maschinelle Lernfunktion, beispielsweise ein neuronales Netz, auch Sicherheitsmerkmale, die von einem fest vorgegebenen Suchmuster abweichen können. Eine solche maschinelle Lernfunktion angewendet auf den Softwarecode eines Softwaremoduls ist sehr flexibel einsetzbar und erkennt eine Vielzahl von Sicherheitsmerkmalen sowie Abwandlungen der bisher bekannten Sicherheitsmerkmale.

In einer vorteilhaften Ausführungsform ist das Identifizierungsschema ein Mustererkennungsverfahren und/oder ein regel-basiertes Verfahren.

Dies hat den Vorteil, dass Sicherheitsmerkmale, deren Aufbau als Muster im Programmcode bekannt ist, zuverlässig und mit einer geringen Rate an Falschidentifizierungen (false positive) identifiziert werden. Bei regelbasierten Verfahren werden bestimmte im Programmcode implementierte Regeln analysiert, die häufig in Schadsoftware verwendet werden. Somit können auch Sicherheitsmerkmale, die solche Regeln nutzen, zum Beispiel das Einfügen einer Vielzahl von Nulloperationen, zuverlässig identifiziert werden.

In einer vorteilhaften Ausführungsform ist die Sicherheitsrichtlinie eine Positivliste oder eine Negativliste.

Dies hat den Vorteil, dass Sicherheitsmerkmale, die in der Positivliste enthalten sind, als vertrauenswürdig eingestuft bzw. solche, die durch eine Negativliste vorgegeben sind, als nicht vertrauenswürdig bewertet werden. Mit einer Positivliste können zugelassene Sicherheitsmerkmale bestätigt werden und ein Softwaremodul dann als vertrauenswürdig bewertet werden, wenn beispielsweise bestimmte vorgegebene Sicherheitsmerkmale vorhanden sind. Bei einer Negativliste wird im Gegensatz dazu ein Softwaremodul als nicht vertrauenswürdig bewertet, wenn ein oder mehrere in der Negativliste aufgeführte Sicherheitsmerkmale identifiziert wurden.

In einer vorteilhaften Ausführungsform verwendet jedes Softwaremodul ein eigenes modulspezifisches Identifizierungsschema und/oder eine eigene modulspezifische Sicherheitsrichtlinie. Solche modulspezifischen Identifizierungsschemata bzw. Sicherheitsrichtlinien können genau auf die entsprechenden Softwaremodule zugeschnitten sein und für das Softwaremodul spezifische Sicherheitsmerkmale identifizieren und bewerten.

In einer vorteilhaften Ausführungsform bewertet jedes Softwaremodul den Softwarecode des nachfolgenden Softwaremoduls anhand eines gerätespezifischen Identifizierungsschemas und/oder jedes Softwaremodul die identifizierten Sicherheitsmerkmale anhand einer für alle Softwaremodule gleichen gerätespezifischen Sicherheitsrichtlinie.

Das gerätespezifische Identifizierungsmodul bzw. die geräte-spezifische Sicherheitsrichtlinie kann ausschließlich oder zusätzlich zu dem modulspezifischen Identifizierungsmodul bzw. der modulspezifischen Sicherheitsrichtlinie im Softwaremodul angewendet werden.

Dies hat den Vorteil, dass durch gerätespezifische Identifizierungsschemata und Sicherheitsrichtlinien insbesondere erreicht werden kann, dass auf einem Gerät stets Softwaremodule mit allgemein vertrauenswürdigen Sicherheitsmerkmalen ausgeführt werden. Bei einer zusätzlichen Prüfung bzw. Bewertung kann eine minimale Basis an gemeinsamen Sicherheitsmerkmalen überprüft werden und dennoch weitere Sicherheitsmerkmale durch die gerätespezifische Sicherheitsrichtlinie als nicht vertrauenswürdig bewertet werden.

In einer vorteilhaften Ausführungsform wird anhand der gerätespezifischen Sicherheitsrichtlinie ein modulspezifischer Gerätevertrauenswürdigkeitswert von jedem einzelnen Softwaremodul ermittelt und aus allen modulspezifischen Gerätevertrauenswürdigkeitswerten ein Gesamtgerätevertrauenswürdigkeitswert ermittelt.

Somit kann die Vertrauenswürdigkeit des gesamten Startvorganges ermittelt werden, die die Vertrauenswürdigkeit jedes einzelnen Softwaremoduls berücksichtigt. So kann beispielsweise der Startvorgang als nicht vertrauenswürdig eingestuft werden, obwohl jedes einzelne nachfolgende Softwaremodul mit einem modulspezifischen Gerätevertrauenswürdigkeitswert über dem vorgegebenen Schwellwert und somit als vertrauenswürdig bewertet wurde. Dies ermöglicht eine zusätzliche Gesamtbetrachtung der Kette von Startmodulen des Gerätes.

In einer vorteilhaften Ausführungsform werden verschiedene modulspezifische Sicherheitsrichtlinien und/oder verschiedene gerätespezifische Sicherheitsrichtlinien für verschiedene baugleiche elektronische Geräte verwendet.

Dadurch kann erreicht werden, dass auf baugleichen Geräten unterschiedliche Funktionalitäten zugelassen werden. Somit werden bereits beim Startvorgang bestimmte Funktionalitäten freigeschaltet und somit beispielsweise Lizenzvorgaben umgesetzt. So kann beispielsweise durch das Verwenden von unterschiedlichen Sicherheitsrichtlinien auf baugleichen Geräten erreicht werden, dass auf einem der Geräte z. B. keine Software laufen darf, die Gigabit-Internet verwendet, auch wenn die Hardware dies ermöglichen würde. Somit können allgemeine Gerätefunktionalitäten zugelassen bzw. nicht zugelassen werden.

In einer vorteilhaften Ausführungsform sind das mindestens eine Identifizierungsschema und/oder die mindestens eine Sicherheitsrichtlinie kryptografisch geschützt und jedes Softwaremodul überprüft kryptografisch das eigene, ihm zugewiesene Identifizierungsschema und/oder die eigene, ihm zugewiesene Sicherheitsrichtlinie vor der Ausführung.

Durch den kryptografischen Schutz des Identifizierungsschemas und der Sicherheitsrichtlinie sowie dem Überprüfen derselben durch jedes Softwaremodul wird die Integrität derselben gewährleistet und somit sichergestellt, dass keine unerlaubte Modifikation vorliegt. Ein kryptographischer Schutz kann beispielsweise durch eine kryptographische Signatur oder einem Verschlüsseln vorliegen.

In einer vorteilhaften Ausführungsform sind das mindestens eine Identifizierungsschema und die mindestens eine Sicherheitsrichtlinie des nachfolgenden Softwaremoduls kryptografisch geschützt und das Softwaremodul überprüft das dem nachfolgenden Softwaremodul zugewiesene Identifizierungsschema und/oder die dem nachfolgenden Softwaremodul zugewiesene Sicherheitsrichtlinie kryptografisch.

Damit wird die kryptografische Integrität des zugewiesenen Identifizierungsschemas und der zugewiesenen Sicherheitsrichtlinie vor dem Laden des Softwarecodes überprüft. Somit kann sichergestellt werden, dass lediglich inhaltlich unveränderte Identifizierungsschemata und Sicherheitsrichtlinien in das nächste Softwaremodul geladen werden und somit die nachfolgende Ladephase und die weitere Prüfung und Bewertung der Softwaremodule der Kette ordnungsgemäß durchgeführt werden. Dabei findet diese Überprüfung, zumindest für das erste Softwaremodul, bevorzugt in einer sicheren Hardware, beispielsweise einem Secure-Element oder beispielsweise einem vertrauenswürdigen Plattformmodul, auch Trusted Plattform Modul (TPM) genannt, statt.

In einer vorteilhaften Ausführungsform liegt der Softwarecode als Objektcode vor.

Mit Objektcode wird übersetzter Softwarecode bezeichnet, der auch Maschinencode genannt wird. Dies hat den Vorteil, dass eine Manipulation eines Softwarecodes bei der Transformation vom Quellcode in Objektcode, beispielsweise durch einen Compiler, bei der Prüfung berücksichtigt wird, da sich eine solche Manipulation im Objektcode widerspiegelt.

In einer vorteilhaften Ausführungsform wird eine Ersatzfunktion ausgeführt, wenn der Vertrauenswürdigkeitswert und/oder der modulspezifische Gerätevertrauenswürdigkeitswert und/oder der Gesamtgerätevertrauenswürdigkeitswert einen Wert ergibt, der gleich oder unter einem jeweils vorgegebenen Schwellwert liegt.

Durch eine solche Ersatzfunktion geht das Verfahren auch bei mangelnder Vertrauenswürdigkeit in einen bekannten, vorgegebenen Zustand über. Durch die Ersatzfunktion werden beispielsweise weitere Maßnahmen, Log-Einträge oder Warnmeldungen ausgelöst werden.

Ein zweiter Aspekt der Erfindung betrifft eine Startvorrichtung zum sicheren Starten einer Gerätesoftware, insbesondere eines Betriebssystems, eines elektronischen Gerätes, die mit dem elektronischen Gerät verbindbar ist, umfassend mindestens einen Prozessor, der derart ausgebildet ist, eine Mehrzahl von aufeinanderfolgenden Softwaremodulen, die Softwarecode enthalten, zu laden und nachfolgende Schritte auszuführen:
a) Ausführen des ersten Softwaremoduls, das einen vertrauenswürdigen Softwarecode umfasst und eine Vertrauenswurzel bildet, durch eine Sicherheitseinrichtung,
b) Laden des nachfolgenden Softwaremoduls durch das vorangehende Modul,
c) Überprüfen des Softwarecodes des nachfolgenden Softwaremoduls und Identifizieren von Sicherheitsmerkmalen anhand eines Identifizierungsschemas,
d) Bewerten der identifizierten Sicherheitsmerkmale anhand einer Sicherheitsrichtlinie,
e) Ausführen des nachfolgenden Softwaremoduls, wenn das Bewerten einen Vertrauenswürdigkeitswert ergibt, der über einem vorgegebenen Schwellwert liegt und
f) Durchführen der Schritte b) bis e) für alle weiteren nachfolgenden Softwaremodule, wobei Sicherheitsmerkmale durch den Softwarecode ausgeführte Funktionen sind, die innerhalb des Softwaremoduls unerwünscht sind.

Ein dritter Aspekt der Erfindung betrifft ein elektronisches Gerät umfassend mindestens einen Prozessor, der derart ausgebildet ist, eine Gerätesoftware, insbesondere ein Betriebssystem, mittels einer Mehrzahl von aufeinanderfolgenden Softwaremodulen, die Softwarecode enthalten, zu laden und nachfolgende Schritte auszuführen:
a) Ausführen des ersten Softwaremoduls, das einen vertrauenswürdigen Softwarecode umfasst und eine Vertrauenswurzel bildet, durch eine Sicherheitseinrichtung,
b) Laden des nachfolgenden Softwaremoduls durch das vorangehende Modul,
c) Überprüfen des Softwarecodes des nachfolgenden Softwaremoduls und Identifizieren von Sicherheitsmerkmalen anhand eines Identifizierungsschemas,
d) Bewerten der identifizierten Sicherheitsmerkmale anhand einer Sicherheitsrichtlinie,
e) Ausführen des nachfolgenden Softwaremoduls, wenn das Bewerten einen Vertrauenswürdigkeitswert ergibt, der über einem vorgegebenen Schwellwert liegt und
f) Durchführen der Schritte b) bis e) für alle weiteren nachfolgenden Softwaremodule, wobei Sicherheitsmerkmale durch den Softwarecode ausgeführte Funktionen sind, die innerhalb des Softwaremoduls unerwünscht sind.

Dadurch wird sichergestellt, dass das elektronische Gerät ein vertrauenswürdiges und vorgegebenen Sicherheitsrichtlinien entsprechendes Betriebssystem umfasst, das Anwendungen und Programme des elektronischen Gerätes korrekt ausführt. Das Betriebssystem des elektronischen Gerätes kann somit vor bzw. bei seiner Einrichtung auf Sicherheitsschwachstellen überprüft werden und abhängig von dem Vertrauenswürdigkeitswert in seiner Funktionalität eingeschränkt werden.

Ein vierter Aspekt der Erfindung betrifft ein Computerprogrammprodukt, das direkt in einen Speicher eines digitalen Computers ladbar ist, umfassend Programmcodeteile, die dazu geeignet sind, die Schritte des beschriebenen Verfahrens durchzuführen.

Die Formulierungen "ein Softwaremodul überprüft, bewertet etc." ist so zu verstehen, dass das Softwaremodul einen Softwarecode enthält, der, wenn er auf einem Prozessor ausgeführt wird, die entsprechenden Aktionen ausführt. Mit dem Begriff "zugewiesenes Identifizierungsschema" oder "zugewiesene Sicherheitsrichtlinie" bezeichnet die durch das Softwaremodul ausgeführten bzw. verwendeten Identifizierungsschemata bzw. Sicherheitsrichtlinien. Ein solches Identifizierungsschema bzw. eine solche Sicherheitsrichtlinie kann als integraler Bestandteil des Softwaremoduls vorliegen oder aber in einer Speichereinrichtung außerhalb des Sicherheitsmoduls abgelegt und im Softwaremodul empfangen werden.

Sofern es in der nachfolgenden Beschreibung nicht anders angegeben ist, beziehen sich die Begriffe "ausführen", "laden", "überprüfen", "bewerten", "durchführen" und dgl. Vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden und vorliegen können, beispielsweise als elektrische Impulse. Insbesondere die Ausdrücke "Computer" und "elektronische Geräte" werden möglichst breit ausgelegt, um insbesondere alle elektronischen Geräte mit Datenverarbeitungseigenschaften abzudecken. Elektronische Geräte und Computer können beispielsweise industrielle Geräte, insbesondere industrielle Geräte im Internet der Dinge, wie beispielsweise Feldgeräte, Personal Computer, Server, Handheld Computersysteme, Mobilfunkgeräte und andere Kommunikationsgeräte sowie Prozessoren zur Datenverarbeitung sein.

Unter einem Prozessor kann im Zusammenhang mit der Erfindung beispielsweise eine elektronische Schaltung verstanden werden. Bei einem Prozessor kann es sich insbesondere um einen Hauptprozessor (englisch: Central Processing Unit, CPU), einen Mikroprozessor oder einen Mikrocontroller, beispielsweise eine anwendungsspezifische integrierte Schaltung oder einen digitalen Signalprozessor, möglichst in Kombination mit einer Speichereinrichtung zum Speichern von Programmbefehlen, die auch als Softwarecode bezeichnet werden, handeln. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens der Erfindung implementiert.

Unter einer Speichereinheit kann im Zusammenhang mit der Erfindung beispielsweise ein Speicher in Form eines Arbeitsspeichers oder einer lösch- und programmierbaren Speichereinheit (EEPROM) verstanden werden.

Ein Computerprogrammprodukt, wie z. B. ein Computerprogrammmittel, kann beispielsweise als Speichermedium, z. B. als Speicherkarte, USB-Stick, CD-ROM oder auch in Form einer programmierbaren Firmware oder auch in Form einer herunterladbaren Datei von einem Server in einem Netzwerk bereitgestellt oder geliefert werden.

Ausführungsbeispiele des erfindungsgemäßen Verfahrens, der erfindungsgemäßen Startvorrichtung sowie eines erfindungsgemäßen elektronischen Gerätes sind in den Zeichnungen beispielhaft dargestellt und werden anhand der nachfolgenden Beschreibung näher erläutert. Es zeigen:
- Fig. 1: ein Ausführungsbeispiel des erfindungsgemäßen Verfahrens als Flussdiagramm;
- Fig. 2: ein zweites Ausführungsbeispiel des erfindungsgemäßen Verfahrens anhand einer schematischen Darstellung der Softwaremodule und deren Funktionen;
- Fig. 3: ein Ausführungsbeispiel einer erfindungsgemäßen Schutzvorrichtung in Blockdarstellung; und
- Fig. 4: ein Ausführungsbeispiel eines erfindungsgemäßen elektronischen Gerätes in Blockdarstellung.

Einander entsprechende Teile sind in allen Figuren mit den gleichen Bezugszeichen versehen.

Um ein elektronisches Gerät, das aus mindestens einem Prozessor und weiteren Einheiten zum Speichern und Verarbeiten von Daten besteht, wird beim Starten des elektronischen Gerätes ein Betriebssystem installiert. Üblicherweise geschieht dies durch das Ausführen mehrerer Softwaremodule, die als Kette aufeinander folgender Softwaremodule ausgeführt werden. Ein jedes Softwaremodul enthält Softwarecode. Dieser Softwarecode umfasst Programmbefehle, die wiederum unterschiedliche Funktionen ausführen. Eine solche Mehrzahl von aufeinander folgenden Softwaremodulen, die zum Starten eines Betriebssystems dienen, wird als Bootkette bezeichnet. Softwaremodule einer solchen Bootkette sind beispielsweise ein erstes Softwaremodul, das einen vertrauenswürdigen Softwarecode umfasst und eine Vertrauenswurzel, auch Root of Trust bezeichnet, bildet. Dieses Softwaremodul kann beispielsweise auf einer nur-Lesespeichereinheit wie beispielsweise einer UEFI-Firmware bereitgestellt werden. Ein darauf nachfolgendes, zweites Softwaremodul ist beispielsweise ein sogenannter Bootloader. Das darauf nachfolgende Softwaremodul ist beispielsweise ein Betriebssystemkern, auch Kernel bezeichnet. Ein darauf nachfolgendes Softwaremodul umfasst beispielsweise Programme eines sogenannten User-Spaces. Weitere Softwaremodule sind möglich.

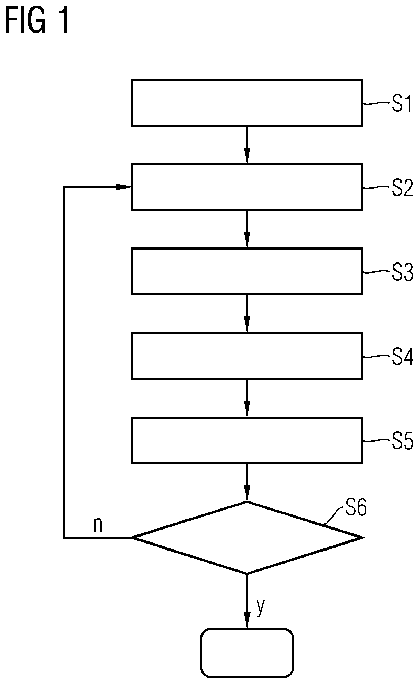

Figur 1 zeigt als ersten Verfahrensschritt S1 das Ausführen eines ersten Softwaremoduls. Dies wird bevorzugterweise in einer Sicherheitseinrichtung im Gerät ausgeführt, da das erste Softwaremodul besonders geschützt sein muss, um die Vertrauenswürdigkeit des gesamten Verfahrens zu gewährleisten.

Anschließend wird als Verfahrensschritt S2 das nachfolgende Softwaremodul, also das zweite Softwaremodul, geladen. Anschließend wird im Verfahrensschritt S3 der Softwarecode des nachfolgenden Softwaremoduls überprüft und anhand eines Identifizierungsschemas dessen Sicherheitsmerkmale identifiziert. Im Verfahrensschritt S4 werden die identifizierten Sicherheitsmerkmale anhand einer Sicherheitsrichtlinie bewertet. Dabei wird ein Vertrauenswürdigkeitswert ermittelt und mit einem vorgegebenen Schwellwert verglichen, um die Vertrauenswürdigkeit zu bewerten. Beispielsweise können der Vertrauenswürdigkeitswert und der vorgegebene Schwellwert ein Zahlenwert, aber auch ein boolescher Wert, der lediglich zwei Zustände "wahr" oder "falsch" oder auch "eins" oder "null" annimmt, sein.

Anschließend wird in einem Verfahrensschritt S5 das nachfolgende Softwaremodul ausgeführt, wenn das Bewerten einen Vertrauenswürdigkeitswert ergibt, der über einem vorgegebenen Schwellwert liegt. Anschließend wird das nächste Softwaremodul aus der Kette von Softwaremodulen geladen und die Verfahrensschritte S2 bis S5 für dieses Softwaremodul durchgeführt. Im dargestellten Verfahrensschritt S6 wird dazu geprüft, ob es sich bei dem zuletzt ausgeführten Softwaremodul um das letzte Softwaremodul handelt. Ist dies der Fall, werden erneut die Schritte S2 bis S6 durchlaufen. Wird im Schritt S6 festgestellt, dass es sich um das letzte Softwaremodul handelt, siehe Pfeil mit Kennzeichen y, wird das Verfahren beendet.

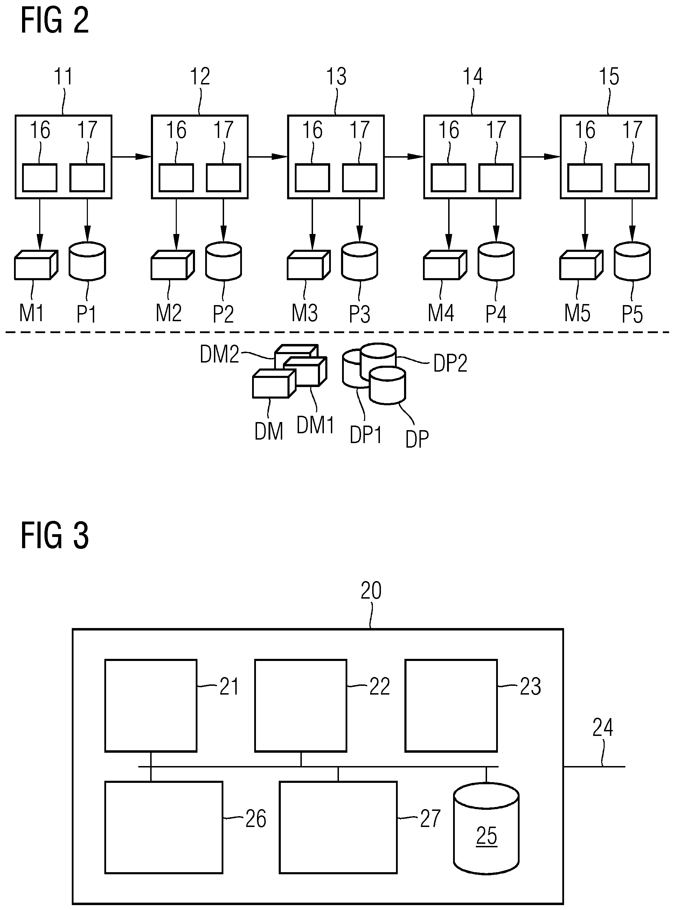

Anhand von Figur 2 wird nun das Verfahren anhand einer Bootkette, bestehend aus fünf Softwaremodulen 11, 12, 13, 14, 15, näher beschrieben. Jedes Softwaremodul 11, ..., 15, enthält einen Softwarecode, der eine Prüf- und Identifizierungsfunktion 16 zum Prüfen des Softwarecodes und Identifizieren von Sicherheitsmerkmalen, sowie eine Bewertungsfunktion 17, zum Bewerten der Sicherheitsmerkmale aufweist. Ausgehend von dem ersten Softwaremodul 11, welches als Boot-Nur-lese-Speicher (ROM) eines Zentralprozessors (CPU) realisiert ist und nach einem "Power-On-Reset" ausgeführt wird, wird das nachfolgende Softwaremodul 12 beispielsweise von einem persistenten Speichermedium in einen Hauptspeicher des elektronischen Geräts geladen. Durch das erste Softwaremodul 11 und insbesondere durch die im ersten Softwaremodul 11 enthaltene Prüf- und Identifizierungsfunktion 16 wird nun das nachfolgende Softwaremodul 12 überprüft und Sicherheitsmerkmale anhand eines Identifizierungsschemas M1 identifiziert. Anschließend werden anhand der Sicherheitsrichtlinie P1 die identifizierten Sicherheitsmerkmale überprüft. Liegt durch das Bewerten ein Vertrauenswürdigkeitswert vor, der über dem vorgegebenen Schwellwert liegt, wird das Softwaremodul 12 ausgeführt.

Bei der Ausführung des Softwaremoduls 12 wird wiederum das nachfolgende Softwaremodul 13 geladen, anhand des Identifizierungsschemas M2 Sicherheitsmerkmale identifiziert und diese anhand der Sicherheitsrichtlinie P2 bewertet. Führt diese Bewertung zu einem positiven Ergebnis so ist das Softwaremodul 13 vertrauenswürdig und wird ausgeführt. Bei der Ausführung des Softwaremoduls 13 wird das nachfolgende Softwaremodul 14 geladen anhand des Identifizierungsschemas M3 und der Sicherheitsrichtlinie P3 bewertet und bei positivem Ergebnis ausgeführt. Entsprechend wird das Softwaremodul 15 im Softwaremodul 14 anhand des Identifizierungsschemas M4 und der Sicherheitsrichtlinie P4 geprüft und bewertet. Ist das Softwaremodul 15 das letzte Glied der Bootkette, so findet hier keine weitere Prüfung und Bewertung statt und ein Identifizierungsschemas M5 und eine Sicherheitsrichtlinie P5 sind nur optional vorhanden.

Die beschriebene Prüfung und Bewertung eines direkt nachfolgendem Softwaremoduls anhand des Identifizierungsschemas und der Sicherheitsrichtlinie eines vom Softwaremoduls kann auch im laufenden Betrieb des elektronischen Geräts stattfinden. Beispielsweise kann der Kernel vor jeder Ausführung eines u-ser-space Programms eine Prüfung vornehmen.

Das Identifizierungsschema M1,..., M5 ist bevorzugt als maschinelle Lernfunktion, beispielsweise als neuronales Netz, ausgebildet. Zur Überprüfung erhält das Identifizierungsschema M1,..., M5 als Eingabedaten das nachfolgende Softwaremodul 12, ..., 15 und gibt als Ausgabe das Vorhandensein oder auch das nicht Vorhandensein eines oder mehrerer Sicherheitsmerkmale aus. Das Identifizierungsschema M1,..., M5 kann insbesondere ein vorab trainiertes, neuronales Netz sein. Daneben oder alternativ können auch Mustererkennungsverfahren oder regelbasierte Verfahren als Identifizierungsschema M1, ..., M5 verwendet werden.

Der Softwarecode des Softwaremoduls liegt bevorzugt als Objektcode vor. Der Objektcode wird durch das Identifizierungsschema M1,..., M5 überprüft und entweder durch maschinelle Lernverfahren oder durch die Signatur oder regelbasierten Methoden untersucht und vorgegebene Muster, die einem Sicherheitsmerkmal entsprechen, erkannt. Auch das nicht Auffinden der überprüften Muster durch das Identifizierungsschema M1,..., M5 können einen Beitrag zur Beurteilung der Vertrauenswürdigkeit des nachfolgenden Softwaremoduls 12, ..., 15 beitragen.

Das Bewerten der identifizierten Sicherheitsmerkmale wird beispielsweise durch ein Bewertungsfunktion 17, die im aktuell vorliegenden Softwaremodul 11 enthalten ist, durchgeführt. Die Bewertungsfunktion 17 bewertet unter Verwendung einer Sicherheitsrichtlinie P1,..., P5, ob die identifizierten Sicherheitsmerkmale zulässig oder unzulässig sind. Weitergehend kann hier auch generell auf das Vorhandensein von Sicherheitsmerkmalen geprüft werden, die für eine vertrauenswürdige Software vorausgesetzt werden. Wird das Softwaremodul 12, ..., 15 anhand der identifizierten Sicherheitsmerkmale als vertrauenswürdig eingestuft, wird sie ausgeführt und führt den Bootprozess fort.

Die Vertrauenswürdigkeit wird dabei beispielsweise durch einen Vertrauenswürdigkeitswert, der einem Sicherheitsmerkmal zugeordnet wird, bewertet und bei beispielsweise Überschreiten eines Schwellwertes wird das betrachtete Softwaremodul als vertrauenswürdig bewertet.

Wird hingegen die Richtlinie P1,..., P5, nicht erfüllt, kann entsprechend eine Ersatzfunktion ausgeführt werden. Eine solche Ersatzfunktion kann abhängig von dem identifizierten Sicherheitsmerkmal oder auch dem nicht Vorhandensein eines bestimmten Sicherheitsmerkmals unterschiedlich sein. Beispielsweise kann eine Ausführungsform der Ersatzfunktion ein Beenden der Bootkette sein. Dabei wird beispielsweise das nachfolgende Softwaremodul 12, ..., 15 nicht ausgeführt. Eine Alternative oder auch zusätzliche Ersatzfunktion kann das Erzeugen eines Log-Eintrags sein. Durch den Log-Eintrag können das Bootverhalten nachvollzogen oder Statistiken zur Häufigkeit und der Art der auftretenden Sicherheitsmerkmale ermittelt werden. Als weitere Ersatzfunktion kann beispielsweise ein externes Schaltsignal, beispielsweise zu einem benachbarten Prozessor, gesetzt werden. Eine weitere Ersatzfunktion kann das Ausführen des nachfolgenden Softwaremoduls 12, ..., 15 mit nur eingeschränkten Funktionen oder Rechten sein. Beispielsweise kann das Softwaremodul nur als sogenannter "Non-Root-Nutzer" betrieben werden, falls ein bestimmtes Sicherheitsmerkmal erkannt wird oder fehlt.

Dabei kann jedes Softwaremodul 11, ..., 15 ein eigenes, für dieses Softwaremodul spezifisches Identifizierungsschema M1 ..., M5, sowie eine eigene modulspezifische Sicherheitsrichtlinie P1, ..., P5 verwenden. Alternativ oder zusätzlich kann jedes Softwaremodul 11, ..., 15 ein für alle Softwaremodule geltendes, gerätespezifische Identifizierungsschema DM und gerätespezifische Sicherheitsrichtlinie DP verwenden. Durch ein gerätespezifisches Modell DM und eine gerätespezifische Sicherheitsrichtlinie DP kann insbesondere erreicht werden, dass auf einem Gerät stets Softwaremodule mit allgemein vertrauenswürdigen Sicherheitsmerkmalen ausgeführt werden. Anhand der gerätespezifischen Sicherheitsrichtlinie DP wird somit ein modulspezifischer Gerätevertrauenswürdigkeitswert von jedem einzelnen Softwaremodul ermittelt. Aus allen modulspezifischen Gerätevertrauenswürdigkeitswerten wird ein Gesamtgerätevertrauenswürdigkeitswert ermittelt. Durch das Verwenden von unterschiedlichen gerätespezifischen Sicherheitsrichtlinien DP1, DP2, wird erreicht, dass baugleiche Geräte unterschiedliche Funktionalitäten aufweisen.

Eine Sicherheitsrichtlinie P1,..., P5, DP, DP1, DP2 kann insbesondere als eine Positivliste oder auch eine Negativliste ausgeführt sein. Bei einer Positivliste sind alle Sicherheitsmerkmale enthalten, die in einem Softwaremodul enthalten sein dürfen und somit zulässig sind. Bei einer Negativliste sind Sicherheitsmerkmale enthalten, die nicht zulässig und somit nicht in einem Softwaremodul enthalten sein dürfen.

Um die Vertrauenswürdigkeit des Bootvorganges weiter zu erhöhen, sind die Identifizierungsschemata M1,..., M5 sowie die Sicherheitsrichtlinien P1,..., P5, bevorzugt kryptografisch geschützt und werden vor der Ausführung durch das Softwaremodul überprüft. Dabei kann zum einen ein Sicherheitsmodul, beispielsweise das Sicherheitsmodul 12, seine ihm zugewiesenen Identifizierungsschemata M2 und Sicherheitsrichtlinien P2 kryptografisch überprüfen. Zusätzlich kann das Sicherheitsmodul 12 aber auch das Identifizierungsschema M3 und die Sicherheitsrichtlinie P3, die dem nachfolgenden Softwaremodul 13 zugeordnet sind, vor der Ausführung des Softwaremoduls 13 prüfen. Eine solche kryptografische Überprüfung findet insbesondere in einer sicheren Hardware, beispielsweise einem Secure-Element statt.

Beispiele für Sicherheitsmerkmale, die überprüft werden können, sind Schwachstellen, Trojaner, Schadprogramme, Hintertüren, Debug-Schnittstellen, kryptografische Codes, Härtungsmaßnahmen, wie Stack-Protection, Vorhandensein von Zugriffskontrollsystemen, wie SELinux und dergleichen. Konkrete Beispiele für identifizierte Sicherheitsmerkmale typischer Softwaremodule einer Bootkette werden in einem industriellen Steuergerät aufgezeigt. In einem Bootloader kann durch den Boot-ROM geprüft werden, ob der zu ladende Bootloader keine Funktionalität für serielle Konsolen, beispielsweise mit einer universalen asynchronen Empfangs- und Sende(UART)-Schaltung beinhaltet, damit das Gerät nicht über diese UART-Schaltung zu einer frühen Bootphase angegriffen werden kann. Durch den Bootloader als Softwaremodul kann geprüft werden, ob ein Linux Kernel als nachfolgendes Softwaremodul, keine Schnittstelle zum gesamten Hauptspeicher zur Verfügung stellt. Der Kernel kann jedesmal, wenn ein User-Space Programm gestartet werden soll, prüfen, ob das zu startende Programm einen privilegierten Systemaufruf ausführen kann. Dadurch wird sichergestellt, dass keine Programme gestartet werden, die mittels solcher Systemaufrufe andere Programme kompromittieren können. So wird sichergestellt, dass ein Angreifer weniger Möglichkeiten besitzt, das Gerät zur Laufzeit zu manipulieren.

Figur 3 zeigt nun eine Startvorrichtung zum sicheren Starten eines Betriebssystems eines elektronischen Geräts, das mindestens einen Prozessor aufweist, der derart ausgebildet ist, die verschiedenen Verfahrensschritte des beschriebenen Verfahrens auszuführen.

Die Startvorrichtung 20 umfasst mindestens einen Prozessor, der zur besseren Übersicht nicht separat dargestellt ist. Die Startvorrichtung umfasst eine Sicherheitseinrichtung 21. Des Weiteren umfasst der Prozessor eine Ladeeinrichtung 22, eine Ausführungseinrichtung 23, eine Speichereinrichtung 25, eine Prüfeinrichtung 26 und eine Bewertungseinrichtung 27.

Die Sicherheitseinrichtung 21 ist derart ausgebildet, insbesondere ein erstes Softwaremodul vor Manipulation zu schützen und die Funktionen des Softwaremoduls auszuführen. Die Ladeeinrichtung 22 ist derart ausgebildet, das jeweils nächste Softwaremodul zu laden. Die Speichervorrichtung 25 speichert die modulspezifischen und gerätespezifischen Identifizierungsschemata bzw. Sicherheitsrichtlinien. Identifizierungsschemata und Softwarerichtlinien können auch von einer externen Einrichtung beispielsweise über die Schnittstelle 24 geladen oder aktualisiert werden.

Die Startvorrichtung 20 wird bevorzugt in ein elektronisches Gerät fest verbaut oder ist zumindest lösbar mit einem elektronischen Gerät verbindbar.

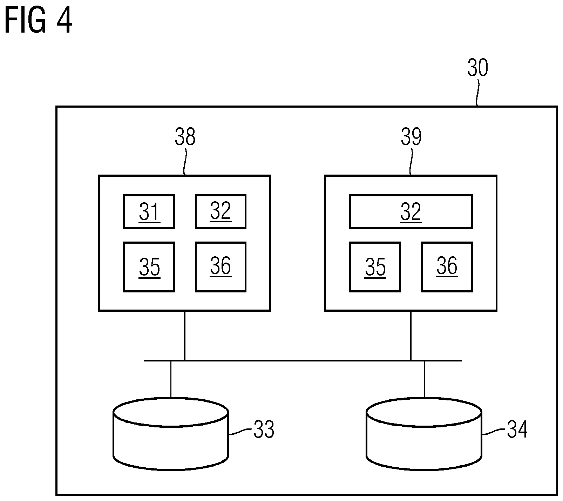

Figur 4 zeigt ein elektronisches Gerät 30, das zum sicheren Starten eines Betriebssystems mindestens einen Prozessor umfasst, der derart ausgebildet ist, das beschriebene Verfahren auszuführen.

Beispielhaft umfasst das elektronische Gerät 30 eine Sicherheitseinrichtung 31, die das erste Softwaremodul speichert und ausführt. Die Sicherheitseinrichtung 31 ist beispielsweise auf einem Prozessor 38 ausgebildet, auf dem auch eine Lade- und Ausführungsvorrichtung 32 sowie eine Prüffunktion 35 und eine Bewertungsfunktion 36 ausgebildet sind, die das nachfolgende Softwaremodul laden, überprüfen und bewerten. Das zugewiesene Identifizierungsschema und die zugewiesene Sicherheitsrichtlinie können beispielsweise von einer Speichereinrichtung 33 geladen werden. Nachfolgende Softwaremodule können beispielsweise auf einer weiteren Speichereinrichtung 34 gespeichert sein. Das Gerät 30 weist einen zweiten Prozessor 39 auf, der ebenfalls eine Lade- und Ausführungsvorrichtung 32, eine Bewertungsfunktion 36 und eine Prüffunktion 35 für eines oder mehrere der nachfolgenden Softwaremodule aufweist. Die verschiedenen Softwaremodule können somit auf unterschiedlichen Einrichtungen bzw. Prozessoren 38, 39 im elektronischen Gerät 30 verteilt ausgebildet sein.

Das beschriebene Verfahren zeigt gegenüber herkömmlichen Verfahren zum Starten eines Betriebssystems den Vorteil, dass keine weiteren kryptografischen Sicherheitsvorkehrungen, wie ein Integritätsschutz oder eine Verschlüsselung zur Überprüfung der Sicherheitsmerkmale in einem Softwaremodul notwendig sind. Eine neue, veränderte Kernel-Version kann durch das gleiche Verfahren auf Vertrauenswürdigkeit geprüft werden, ohne dass beispielsweise die Kernel-Version neu signiert werden muss. Das Verfahren kann auch in Kombination mit gängigen, beispielsweise Secure-boot Verfahren, verwendet werden. In diesem Fall wird ein nachfolgendes Softwaremodul sowohl auf Integrität als auch auf Sicherheitsmerkmale im Softwarecode selbst geprüft. Des Weiteren können dezidiert vertrauenswürdige bzw. unterstützte Sicherheitsmerkmale auf dem Gerät bzw. deren Vorhandensein auf dem Gerät sichergestellt werden. Schwachstellen bzw. Schadprogramme können beim Startvorgang, und somit vor dem Betrieb des elektronischen Gerätes, erkannt und somit vor ihrer Ausführung erkannt werden. Falls beispielsweise der Betriebssystemkernel eine Debug-Schnittstelle versehentlich enthält, die ein Angreifer ausnutzen kann, kann sie beim Bootvorgang vor dem echten Betrieb des Betriebssystems trotz einer gültigen Signatur erkannt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum sicheren Starten einer Gerätesoftware, insbesondere eines Betriebssystems, eines elektronischen Gerätes, bei dem eine Mehrzahl von aufeinanderfolgenden Softwaremodulen (11, 12, 13, 14, 15), die Softwarecode enthalten, vom Gerät ausgeführt werden, umfassend die Schritte:
a) Ausführen (S1) des ersten Softwaremoduls (11), das einen vertrauenswürdigen Softwarecode umfasst und eine Vertrauenswurzel bildet,
b) Laden (S2) des nachfolgenden Softwaremoduls (12) durch das vorangehende Softwaremodul (11),
c) Überprüfen (S3) des Softwarecodes des nachfolgenden Softwaremoduls (12) und Identifizieren von Sicherheitsmerkmalen, anhand eines Identifizierungsschemas (M1),
d) Bewerten (S4) der identifizierten Sicherheitsmerkmale anhand einer Sicherheitsrichtlinie (P1),
e) Ausführen (S5) des nachfolgenden Softwaremoduls (12), wenn das Bewerten einen Vertrauenswürdigkeitswert ergibt, der über einem vorgegebenen Schwellwert liegt, und
f) Durchführen (S6) der Schritte b) bis e) für alle weiteren nachfolgenden Softwaremodule (13, 14, 15),
wobei Sicherheitsmerkmale durch den Softwarecode ausgeführte Funktionen sind, die innerhalb des Softwaremoduls unerwünscht sind.

2. Verfahren nach Anspruch 1, wobei das Identifizierungsschema (M1, M2, M3, M4) eine maschinelle Lernfunktion, insbesondere ein neuronales Netz, ist, und die maschinelle Lernfunktion als Eingabe das nachfolgende Softwaremodul (12) erhält und als Ausgabe eine Information zum Vorhandensein von mindestens einem Sicherheitsmerkmal bereitstellt.

3. Verfahren nach Anspruch 1, wobei das Identifizierungsschema (M1, M2, M3, M4) ein Mustererkennungsverfahren und/oder ein regel-basiertes Verfahren ist.

4. Verfahren nach einem der vorangehenden Ansprüche, wobei die Sicherheitsrichtlinie (P1, P2, P3, P4) eine Positivliste oder eine Negativliste ist.

5. Verfahren nach einem der vorangehenden Ansprüche, wobei jedes Softwaremodul (11,..,15) ein eigenes, Modulspezifisches Identifizierungsschema (M1,..M4) und/oder eine eigene Modul-spezifische Sicherheitsrichtlinie (P1,..,P4) verwendet.

6. Verfahren nach einem der vorangehenden Ansprüche, wobei jedes Softwaremodul (11,..,14) den Softwarecode des nachfolgenden Softwaremoduls (12,..,15) anhand eines Geräte-spezifischen Identifizierungsschemas (DM) überprüft und/oder jedes Softwaremodul die identifizierten Sicherheitsmerkmale anhand einer Geräte-spezifischen Sicherheitsrichtlinie (DP) bewertet.

7. Verfahren nach Anspruch 6, wobei anhand der Geräte-spezifischen Sicherheitsrichtline (DP) ein Modulspezifischer-Geräte-Vertrauenswürdigkeitswert von jedem einzelnen Softwaremodul (11,..,15) ermittelt wird und aus allen Modulspezifischen-Geräte-Vertrauenswürdigkeitswerten ein GesamtgeräteVertrauenswürdigkeitswert ermittelt wird.

8. Verfahren nach Anspruch 7, wobei verschiedene Modul-spezifische Sicherheitsrichtlinien (P1,.., P4) und/oder verschiedene Geräte-spezifische Sicherheitsrichtlinien (DP1, DP2) für verschiedene baugleiche elektronische Geräte verwendet werden.

9. Verfahren nach einem der vorangehenden Ansprüche, wobei das mindestens eine Identifizierungsschema (M1, M2, M3, M4) und/oder die mindestens eine Sicherheitsrichtlinie (P1,..,P4) kryptographisch geschützt sind und jedes Softwaremodul das eigene, ihm zugewiesene Identifizierungsschema (M1, M2, M3, M4) und/oder die eigene, ihm zugewiesene Sicherheitsrichtlinie vor der Ausführung kryptographisch überprüft.

10. Verfahren nach einem der vorangehenden Ansprüche, wobei das mindestens eine Identifizierungsschema (M1, M2, M3, M4) und die mindestens eine Sicherheitsrichtlinie (P1,..,P4) des nachfolgenden Softwaremoduls kryptographisch geschützt sind und das Softwaremodul (11,..,15) das dem nachfolgenden Softwaremodul zugewiesene Identifizierungsschema (M1, M2, M3, M4) und/oder die dem nachfolgenden Softwaremodul zugewiesene Sicherheitsrichtlinie (P1,..,P4) kryptographisch überprüft.

11. Verfahren nach einem der vorangehenden Ansprüche, wobei der Softwarecode als Objektcode vorliegt.

12. Verfahren nach einem Anspruch 1 oder 7, wobei eine Ersatzfunktion ausgeführt wird, wenn der Vertrauenswürdigkeitswert und/oder der Modulspezifische-GeräteVertrauenswürdigkeitswert und/oder der GesamtgeräteVertrauenswürdigkeitswert einen Wert ergibt, der gleich oder unter einem jeweils vorgegebenen Schwellwert liegt.

13. Startvorrichtung zum sicheren Starten einer Gerätesoftware, insbesondere eines Betriebssystems, eines elektronischen Gerätes, die mit dem elektronischen Gerät verbindbar ist, umfassend mindestens einen Prozessor, der derart ausgebildet ist, eine Mehrzahl von aufeinanderfolgenden Softwaremodulen, die Softwarecode enthalten, zu laden und nachfolgende Schritte auszuführen:
a) Ausführen (S1) des ersten Softwaremoduls (11), das einen vertrauenswürdigen Softwarecode umfasst und eine Vertrauenswurzel bildet,
b) Laden (S2) des nachfolgenden Softwaremoduls (12) durch das vorangehende Softwaremodul (11),
c) Überprüfen (S3) des Softwarecodes des nachfolgenden Softwaremoduls (12) und Identifizieren von Sicherheitsmerkmalen, anhand eines Identifizierungsschemas (M1),
d) Bewerten (S4) der identifizierten Sicherheitsmerkmale anhand einer Sicherheitsrichtlinie (P1),
e) Ausführen (S5) des nachfolgenden Softwaremoduls (12), wenn das Bewerten einen Vertrauenswürdigkeitswert ergibt, der über einem vorgegebenen Schwellwert liegt, und
f) Durchführen (S6) der Schritte b) bis e) für alle weiteren nachfolgenden Softwaremodule (13, 14, 15),
wobei Sicherheitsmerkmale durch den Softwarecode ausgeführte Funktionen sind, die innerhalb des Softwaremoduls unerwünscht sind.

14. Elektronisches Gerät umfassend mindestens einen Prozessor, der derart ausgebildet ist, eine Gerätesoftware, insbesondere ein Betriebssystem, mittels einer Mehrzahl von aufeinanderfolgenden Softwaremodulen, die Softwarecode enthalten, zu laden und nachfolgende Schritte auszuführen:
a) Ausführen (S1) des ersten Softwaremoduls (11), das einen vertrauenswürdigen Softwarecode umfasst und eine Vertrauenswurzel bildet,
b) Laden (S2) des nachfolgenden Softwaremoduls (12) durch das vorangehende Softwaremodul (11),
c) Überprüfen (S3) des Softwarecodes des nachfolgenden Softwaremoduls (12) und Identifizieren von Sicherheitsmerkmalen, anhand eines Identifizierungsschemas (M1),
d) Bewerten (S4) der identifizierten Sicherheitsmerkmale anhand einer Sicherheitsrichtlinie (P1),
e) Ausführen (S5) des nachfolgenden Softwaremoduls (12), wenn das Bewerten einen Vertrauenswürdigkeitswert ergibt, der über einem vorgegebenen Schwellwert liegt, und
f) Durchführen (S6) der Schritte b) bis e) für alle weiteren nachfolgenden Softwaremodule (13, 14, 15),
wobei Sicherheitsmerkmale durch den Softwarecode ausgeführte Funktionen sind, die innerhalb des Softwaremoduls unerwünscht sind.

15. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 12 durchzuführen.

## Claims

1. Method for securely starting device software, in particular an operating system, of an electronic device, in which a plurality of successive software modules (11, 12, 13, 14, 15) containing software code are executed by the device, comprising the steps of:
a) executing (S1) the first software module (11) which comprises trusted software code and forms a root of trust,
b) loading (S2) the subsequent software module (12) by way of the preceding software module (11),
c) checking (S3) the software code of the subsequent software module (12) and identifying security features on the basis of an identification scheme (M1),
d) assessing (S4) the identified security features on the basis of a security guideline (P1),
e) executing (S5) the subsequent software module (12) if the assessment reveals a trustworthiness value which is above a predefined threshold value, and
f) carrying out (S6) steps b) to e) for all further subsequent software modules (13, 14, 15),
wherein security features are functions which are performed by the software code and are undesirable within the software module.

2. Method according to Claim 1, wherein the identification scheme (M1, M2, M3, M4) is a machine learning function, in particular a neural network, and the machine learning function receives the subsequent software module (12) as an input and provides an item of information relating to the presence of at least one security feature as an output.

3. Method according to Claim 1, wherein the identification scheme (M1, M2, M3, M4) is a pattern recognition method and/or a rule-based method.

4. Method according to one of the preceding claims, wherein the security guideline (P1, P2, P3, P4) is a positive list or a negative list.

5. Method according to one of the preceding claims, wherein each software module (11,..,15) uses its own module-specific identification scheme (M1,..,M4) and/or its own module-specific security guideline (P1,..,P4).

6. Method according to one of the preceding claims, wherein each software module (11,..,14) checks the software code of the subsequent software module (12,..,15) on the basis of a device-specific identification scheme (DM) and/or each software module assesses the identified security features on the basis of a device-specific security guideline (DP).

7. Method according to Claim 6, wherein a module-specific device trustworthiness value is determined by each individual software module (11,..,15) on the basis of the device-specific security guideline (DP) and an overall device trustworthiness value is determined from all module-specific device trustworthiness values.

8. Method according to Claim 7, wherein different module-specific security guidelines (P1,..,P4) and/or different device-specific security guidelines (DP1, DP2) are used for different structurally identical electronic devices.

9. Method according to one of the preceding claims, wherein the at least one identification scheme (M1, M2, M3, M4) and/or the at least one security guideline (P1,..,P4) is/are cryptographically protected and each software module cryptographically checks its own identification scheme (M1, M2, M3, M4) assigned to it and/or its own security guideline assigned to it before execution.

10. Method according to one of the preceding claims, wherein the at least one identification scheme (M1, M2, M3, M4) and the at least one security guideline (P1,..,P4) of the subsequent software module are cryptographically protected and the software module (11,..,15) cryptographically checks the identification scheme (M1, M2, M3, M4) assigned to the subsequent software module and/or the security guideline (P1,..,P4) assigned to the subsequent software module.

11. Method according to one of the preceding claims, wherein the software code is in the form of object code.

12. Method according to Claim 1 or 7, wherein a substitute function is performed if the trustworthiness value and/or the module-specific device trustworthiness value and/or the overall device trustworthiness value produce(s) a value which is equal to or below a respectively predefined threshold value.

13. Starting apparatus for securely starting device software, in particular an operating system, of an electronic device, which starting apparatus can be connected to the electronic device and comprises at least one processor which is designed to load a plurality of successive software modules containing software code and to carry out the following steps of:
a) executing (S1) the first software module (11) which comprises trusted software code and forms a root of trust,
b) loading (S2) the subsequent software module (12) by way of the preceding software module (11),
c) checking (S3) the software code of the subsequent software module (12) and identifying security features on the basis of an identification scheme (M1),
d) assessing (S4) the identified security features on the basis of a security guideline (P1),
e) executing (S5) the subsequent software module (12) if the assessment reveals a trustworthiness value which is above a predefined threshold value, and
f) carrying out (S6) steps b) to e) for all further subsequent software modules (13, 14, 15),
wherein security features are functions which are performed by the software code and are undesirable within the software module.

14. Electronic device comprising at least one processor which is designed to load device software, in particular an operating system, by means of a plurality of successive software modules containing software code and to carry out the following steps of:
a) executing (S1) the first software module (11) which comprises trusted software code and forms a root of trust,
b) loading (S2) the subsequent software module (12) by way of the preceding software module (11),
c) checking (S3) the software code of the subsequent software module (12) and identifying security features on the basis of an identification scheme (M1),
d) assessing (S4) the identified security features on the basis of a security guideline (P1),
e) executing (S5) the subsequent software module (12) if the assessment reveals a trustworthiness value which is above a predefined threshold value, and
f) carrying out (S6) steps b) to e) for all further subsequent software modules (13, 14, 15),
wherein security features are functions which are performed by the software code and are undesirable within the software module.

15. Computer program product which can be directly loaded into a memory of a digital computer, comprising program code parts which are suitable for carrying out the steps of the method according to one of Claims 1 to 12.

## Revendications

1. Procédé permettant le démarrage sécurisé d'un logiciel d'appareil, en particulier, d'un système d'exploitation, d'un appareil électronique, dans lequel une pluralité de modules logiciels successifs (11, 12, 13, 14, 15) qui contiennent un code logiciel, sont mis en oeuvre par l'appareil, comprenant les étapes suivantes :
a) mise en oeuvre (S1) du premier module logiciel (11) qui comprend un code logiciel fiable et forme une racine de confiance,
b) chargement (S2) du module logiciel suivant (12) par le biais du module logiciel précédent (11),
c) vérification (S3) du code logiciel du module logiciel suivant (12) et identification de caractéristiques de sécurité, à l'aide d'un schéma d'identification (M1),
d) évaluation (S4) des caractéristiques de sécurité identifiées à l'aide d'une directive de sécurité (P1),
e) mise en oeuvre (S5) du module logiciel suivant (12) si l'évaluation donne une valeur de fiabilité qui est supérieure à une valeur seuil prédéfinie, et
f) exécution (S6) des étapes b) à e) pour tous les autres modules logiciels suivants (13, 14, 15),
dans lequel des caractéristiques de sécurité sont des fonctions mises en oeuvre par le biais du code logiciel qui ne sont pas souhaitées à l'intérieur du module logiciel.

2. Procédé selon la revendication 1, dans lequel le schéma d'identification (M1, M2, M3, M4) est une fonction d'apprentissage machine, en particulier un réseau de neurones, et la fonction d'apprentissage machine reçoit en tant qu'entrée le module logiciel suivant (12) et met à disposition en tant que sortie une information sur la présence d'au moins une caractéristique de sécurité.

3. Procédé selon la revendication 1, dans lequel le schéma d'identification (M1, M2, M3, M4) est un procédé de reconnaissance de modèles et/ou un procédé se basant sur des règles.

4. Procédé selon l'une quelconque des revendications précédentes, dans lequel la directive de sécurité (P1, P2, P3, P4) est une liste positive ou une liste négative.

5. Procédé selon l'une quelconque des revendications précédentes, dans lequel chaque module logiciel (11, ..., 15) utilise son propre schéma d'identification spécifique au module (M1, ..., M4) et/ou sa propre directive de sécurité spécifique au module (P1, ..., P4) .

6. Procédé selon l'une quelconque des revendications précédentes, dans lequel chaque module logiciel (11, ..., 14) vérifie le code logiciel du module logiciel suivant (12, ..., 15) à l'aide d'un schéma d'identification spécifique à l'appareil (DM) et/ou chaque module logiciel évalue les caractéristiques de sécurité identifiées à l'aide d'une directive de sécurité (DP) spécifique à l'appareil.

7. Procédé selon la revendication 6, dans lequel à l'aide de la directive de sécurité (DP) spécifique à l'appareil une valeur de fiabilité d'appareil spécifique au module est déterminée par chaque module logiciel individuel (11, ..., 15) et une valeur de fiabilité d'ensemble des appareils est déterminée à partir de toutes les valeurs de fiabilité d'appareil spécifiques aux modules.

8. Procédé selon la revendication 7, dans lequel différentes directives de sécurité spécifiques aux modules (P1, ..., P4) et/ou différentes directives de sécurité spécifiques aux appareils (DP1, DP2) sont utilisées pour différents appareils électroniques identiques.

9. Procédé selon l'une quelconque des revendications précédentes, dans lequel l'au moins un schéma d'identification (M1, M2, M3, M4) et/ou l'au moins une directive de sécurité (P1, ..., P4) sont protégés de manière cryptographique et chaque module logiciel vérifie de manière cryptographique son propre schéma d'identification attribué à celui-ci (M1, M2, M3, M4) et/ou sa propre directive de sécurité attribuée à celui-ci avant la mise en oeuvre.

10. Procédé selon l'une quelconque des revendications précédentes, dans lequel l'au moins un schéma d'identification (M1, M2, M3, M4) et l'au moins une directive de sécurité (P1, ..., P4) du module logiciel suivant sont protégés de manière cryptographique et le module logiciel (11, ..., 15) vérifie de manière cryptographique le schéma d'identification (M1, M2, M3, M4) attribué au module logiciel suivant et/ou la directive de sécurité (P1, ..., P4) attribuée au module logiciel suivant.

11. Procédé selon l'une quelconque des revendications précédentes, dans lequel le code logiciel est présent en tant que code objet.

12. Procédé selon l'une quelconque des revendications 1 ou 7, dans lequel une fonction de remplacement est mise en oeuvre si la valeur de fiabilité et/ou la valeur de fiabilité d'appareil spécifique au module et/ou la valeur de fiabilité d'ensemble d'appareils génère une valeur qui est inférieure ou égale à une valeur seuil prédéfinie respectivement.

13. Dispositif de démarrage permettant le démarrage sécurisé d'un logiciel d'appareil, en particulier d'un système d'exploitation, d'un appareil électronique, qui peut être relié à l'appareil électronique, comprenant au moins un processeur qui est configuré pour charger une pluralité de modules logiciels successifs qui contiennent le code logiciel et mettre en oeuvre les étapes suivantes :
a) mise en oeuvre (S1) du premier module logiciel (11) qui comprend un code logiciel fiable et forme une racine de confiance,
b) chargement (S2) du module logiciel suivant (12) par le biais du module logiciel précédent (11),
c) vérification (S3) du code logiciel du module logiciel suivant (12) et identification de caractéristiques de sécurité, à l'aide d'un schéma d'identification (M1),
d) évaluation (S4) des caractéristiques de sécurité identifiées à l'aide d'une directive de sécurité (P1),
e) mise en oeuvre (S5) du module logiciel suivant (12) si l'évaluation donne une valeur de fiabilité qui est supérieure à une valeur seuil prédéfinie, et
f) exécution (S6) des étapes b) à e) pour tous les autres modules logiciels suivants (13, 14, 15),
dans lequel des caractéristiques de sécurité sont des fonctions mises en oeuvre par le biais du code logiciel qui ne sont pas souhaitées à l'intérieur du module logiciel.

14. Appareil électronique comprenant au moins un processeur qui est configuré pour charger un logiciel d'appareil, en particulier un système d'exploitation, au moyen d'une pluralité de modules logiciels successifs qui contiennent le code logiciel et mettre en oeuvre les étapes suivantes :
a) mise en oeuvre (S1) du premier module logiciel (11) qui comprend un code logiciel fiable et forme une racine de confiance,
b) chargement (S2) du module logiciel suivant (12) par le biais du module logiciel précédent (11),
c) vérification (S3) du code logiciel du module logiciel suivant (12) et identification de caractéristiques de sécurité, à l'aide d'un schéma d'identification (M1),
d) évaluation (S4) des caractéristiques de sécurité identifiées à l'aide d'une directive de sécurité (P1),
e) mise en oeuvre (S5) du module logiciel suivant (12) si l'évaluation donne une valeur de fiabilité qui est supérieure à une valeur seuil prédéfinie, et
f) exécution (S6) des étapes b) à e) pour tous les autres modules logiciels suivants (13, 14, 15),
dans lequel des caractéristiques de sécurité sont des fonctions mises en oeuvre par le biais du code logiciel qui ne sont pas souhaitées à l'intérieur du module logiciel.

15. Produit de programme informatique qui peut être chargé directement dans une mémoire d'un ordinateur numérique, comprenant des parties de code de programme qui sont appropriées pour exécuter les étapes du procédé selon l'une quelconque des revendications 1 à 12.
